# FASCICULE DE BREVET EUROPEEN

(11) **EP 1 175 295 B1**
(45) Date de publication et mention de la délivrance du brevet: **05.03.2003**
(21) Numéro de dépôt: 00925393.1
(22) Date de dépôt: 04.05.2000
(51) Int. Cl.: B29C 70/44, B29C 33/50, B29B 13/02

(54) **PRODUITS COMPOSITES CREUX ET PROCEDE DE FABRICATION**
HOHLE VERBUNDGEGENSTÄNDE UND VERFAHREN ZU DEREN HERSTELLUNG
HOLLOW COMPOSITE PRODUCTS AND METHOD FOR MAKING SAME

(30) Priorité: 04.05.1999 FR 9905657
(43) Date de publication de la demande: 30.01.2002
(73) Titulaire: Saint-Gobain Vetrotex France S.A., 73000 Chambéry (FR)
(72) Inventeur: ZANELLA, Guy, F-73160 Cognin (FR); DUFAYARD, Gilbert, F-73370 Le Bourget du Lac (FR)
(74) Mandataire: Muller, René
(86) Numéro de dépôt international: FR0001211
(87) Numéro de publication internationale: WO00066347

(56) Documents cités:
- WO-A-92/12847
- WO-A-98/51481
- US-A- 5 419 554
- US-A- 5 795 423

## Description

La présente invention concerne de nouveaux produits composites ainsi qu'un procédé de fabrication de ces produits. Par « produit composite » on entend « produit comprenant au moins deux matières de points de fusion différents » et par produit « creux » on entend que le produit présente, à l'intérieur, une ou plusieurs parties creuses entourées par des parois, la ou les parties creuses à l'intérieur du produit pouvant être vides ou munies d'un ou plusieurs matériaux de remplissage.

Les produits composites sont généralement des produits moulés pleins, obtenus par injection ou compression dans un moule ou une presse. Selon les matériaux utilisés et la forme de ces produits, ils peuvent convenir à différents types d'applications. La présente invention cherche à obtenir de nouveaux produits composites particulièrement adaptés a l'utilisation en tant que pièces de structure et/ou d'absorption d'énergie (par exemple en tant que poutres de pare-chocs de véhicules automobiles, longerons de protection, absorbeurs d'énergie pour pare-chocs, pièces de structure pour bateaux, traverses supports, etc.). La présente invention a également pour but de fournir un procédé rapide et économique de fabrication de ces produits.

Ces buts sont atteints en premier lieu par le produit selon l'invention, ce produit étant un produit composite creux comprenant plus de 20 % en poids de matière de renfort (de préférence du verre) sous forme de fibres longues, l'épaisseur des parois du produit (que ce soient les parois extérieures ou éventuellement les parois internes séparant le cas échéant plusieurs parties creuses de la pièce) étant en outre comprise entre 1 et 10 mm environ.

La présente invention concerne également un procédé de fabrication de produits composites creux adapté à la fabrication des produits selon l'invention, ce procédé étant défini en revendication 1. Dans ce procédé, on introduit dans un moule un ensemble préchauffé comprenant à coeur au moins une poche gonflable, cette poche gonflable étant revêtue d'au moins une structure composite comprenant au moins une matière de renfort sous forme de fibres longues et l'ensemble préchauffé comprenant au moins un matériau apte à fluer, et, dans ce procédé, on gonfle la poche gonflable sous une pression supérieure à 40 bars afin que l'ensemble préchauffé prenne la forme du moule.

Il convient de bien distinguer le procédé selon la présente invention des procédés déjà existants de fabrication de produits creux par soufflage (par exemple des procédés de moulage par injection puis soufflage ou des procédés dans lesquels on extrude une paraison de matière thermoplastique avant mise en place dans un moule puis soufflage), ces procédés utilisant des pressions de soufflage inférieures à 15 bars et dans la plupart des cas ne dépassant pas 5 bars. Ces procédés existants. utilisant des pressions différentes, des étapes de traitement différentes et des matériaux de départ différents ( ne comprenant pas généralement de fibres de renfort longues) ne conviennent pas à la fabrication de produits composites tels que recherchés selon l'invention et/ou ne sont pas économiques (ils utilisent par exemple de coûteuses baudruches gonflables en silicone) et/ou ne sont adaptés qu'à des petites séries (10 à 15 pièces par jour) et/ou peuvent éventuellement poser pour certains d'entre eux des problèmes en matière d'environnement.

Les produits creux comprenant des fibres de renfort longues sont quant à eux généralement obtenus par moulage en présence d'une baudruche gonflable. Par exemple, dans WO-A-98/51481, on utilise une préforme autoportante poreuse que l'on introduit dans une baudruche formée d'une membrane flexible expansible recouverte d'un matériau comprenant des fils thermoplastiques et des fils hybrides de verre et d'un thermoplastique. L'ensemble ainsi formé est disposé dans un moule puis il est chauffé en procédant simultanément au gonflage de la baudruche à une pression de l'ordre de 0,5 à 1 MPa (5 à 10 bars). Du fait de la faible pression mise en oeuvre, ce procédé reste limité à la fabrication de produits creux de forme peu complexe et d'épaisseur relativement élevée.

Le procédé selon l'invention peut être opéré manuellement ou automatisé. Il est particulièrement simple et économique, répond à un souci de sécurité et de préservation de l'environnement et permet d'obtenir des pièces de forme plus ou moins complexe et de dimensions plus ou moins importantes. En particulier, il est adapté à la fabrication de grandes pièces ou séries de pièces (contrairement aux procédés de moulage sous vide ou de moulage par injection puis soufflage), ce procédé pouvant également être utilisé pour faire des faibles séries de produits. Le procédé selon l'invention est également rapide, il permet d'obtenir des pièces composites creuses en une seule opération de moulage et permet d'envisager la fabrication de pièces présentant des taux de renforts élevés. En particulier, il permet d'obtenir, de façon rentable, des pièces à taux de renforts supérieurs à 40 ou 45 % en poids environ, ces taux pouvant aller jusqu'à 75-80 %.

Le produit composite creux obtenu selon l'invention présente généralement entre 20 et 80 % en poids de matière de renforcement (de préférence du verre), en particulier au moins 20 % (en poids) de matière de renfort sous forme de fibres longues (ce produit pouvant comprendre. comme renforts, uniquement des fibres longues ou pouvant comprendre des renforts sous d'autres formes, par exemple sous forme de fibres courtes, en plus des fibres longues), et présente une épaisseur de parois comprise entre 1 et 10 mm environ, de préférence inférieure ou égale à 6 mm. Il présente en outre, dans la plupart des cas et de préférence, une section fermée (par exemple circulaire ou rectangulaire ou trapézoïdale ou carrée...). Ce produit présente de bonnes caractéristiques de résistance mécanique pour un poids modéré, le couple poids/résistance mécanique (ou inertie en cas de choc) de ce produit étant plus avantageux que celui du même produit plein ou que celui du même produit présentant une section ouverte (par exemple un produit à section en U). Le produit selon l'invention présente en particulier une bonne résistance à la torsion et à la flexion, tout en présentant un poids et une épaisseur des parois particulièrement faibles. L'épaisseur des parois du produit telle que définie est économiquement avantageuse tout en permettant d'obtenir les caractéristiques de résistance recherchées et tout en autorisant, pour la réalisation du produit, l'utilisation de structures composites complexes formées de plusieurs couches, comme explicité ultérieurement.

Suivant sa destination, la pièce composite creuse (ou produit composite creux) selon l'invention peut être munie d'un matériau de remplissage, par exemple d'une mousse (le remplissage se faisant par exemple en injectant un polymère alvéolaire sous forme de mousse à l'intérieur de la pièce), mais est de préférence vide de façon à présenter un ensemble de caractéristiques coût/poids/propriétés mécaniques particulièrement avantageux.

La structure composite utilisée dans le procédé selon l'invention est peu épaisse par rapport à sa surface, est généralement plane mais peut présenter, le cas échéant, une souplesse suffisante pour pouvoir être collectée et stockée sous forme enroulée. Elle peut être pleine ou ajourée et présente avantageusement une tenue suffisante (ou une structure suffisamment fixée ou liée ou rigide) pour pouvoir être manipulée et mise en oeuvre dans le procédé selon l'invention. Elle peut être formée d'une ou plusieurs couches, comme explicité ultérieurement.

La structure composite utilisée selon l'invention est formée d'au moins deux matières de points de fusion différents. Généralement, elle comprend au moins une matière organique thermoplastique (telle que du polypropyléne, du polyéthyléne, du polybutylène téréphtalate, du polyéthylène céréphtalate, du polyamide, etc.) ou thermodurcissable et au moins une matière de renforcement (au moins en partie sous forme de fibres, par exemple des fibres naturelles, synthétiques, fibres de carbone, fibres d'aramide, fibres de verre...) de cette matière organique. De préférence, elle comprend au moins une matière organique thermoplastique et de préférence également elle comprend au moins des fibres de verre.

Conformément à la définition de l'invention, on utilise une structure composite comprenant une matière de renfort sous forme de fibres « longues », c'est-à-dire sous forme de fibres présentant une longueur supérieure à 1 mm (par opposition aux fibres « courtes » d'une longueur comprise entre 0,1 et 1 mm). Plus particulièrement, les fibres « longues » mentionnées dans la présente invention sont des fibres présentant initialement (dans la structure composite prête à être utilisée dans le procédé selon l'invention) une longueur telle que leur longueur finale (dans le produit creux fini obtenu après moulage) est supérieure à 1 mm (leur longueur initiale étant alors à plus forte raison supérieure à 1 mm). Les fibres longues de la structure composite utilisée se présentent par exemple sous forme de fibres continues (de plusieurs centimètres ou mètres de longueur) ou de fibres « coupées » (de longueur supérieure à 1 mm, par exemple de l'ordre de quelques millimètres ou centimètres, ces fibres dites « coupées » incluant également des fibres de type verranne). Afin d'obtenir les produits selon l'invention, le taux de fibres longues dans la structure composite est également choisi avantageusement supérieur à 20 % en poids de la structure.

La présence d'une matière de renfort sous forme de fibres longues est importante pour limiter les risques de perforation et d'inflammation de la poche gonflable (ces phénomènes ayant été observés en utilisant uniquement des fibres courtes de renforcement) pendant le moulage et pour l'obtention de bonnes propriétés mécaniques (en particulier lorsqu'il s'agit de fils continus). La présence de fibres longues de renforcement dans la structure, en particulier de fils continus, contribue également à la bonne tenue de la structure lors de sa manipulation et de sa mise en oeuvre et rend possible le chauffage et l'enroulement de la structure, comme requis dans plusieurs modes de réalisation du procédé selon l'invention.

La ou les matières de renforcement (ou de plus haut point de fusion) sous forme de fibres se présentent généralement sous forme de fils ou de filaments (les filaments étant des fils de très faible diamètre, par exemple de l'ordre de 5 à 24 microns de diamètre dans le cas du verre, ces filaments étant obtenus par exemple par étirage de filets de matière fondue et étant généralement rassemblés en un ou plusieurs fils de diamètre plus élevé). La structure composite peut également avantageusement comprendre au moins une matière organique (ou de plus bas point de fusion dans le cas le plus général) sous forme de fils ou de filaments ; en particulier, il est avantageux que la structure composite comprenne au moins un assemblage ou une nappe de fils comprenant des filaments ou fils de matière organique entremêlés et/ou intercalés avec des filaments ou fils de renfort. La structure composite peut notamment comprendre avantageusement des fils mixtes obtenus par la réunion et le bobinage simultané de fils ou de filaments de l'une des matières et de fils ou de filaments de l'autre matière, ces fils mixtes pouvant être mélangés dans la structure avec des fils de l'une des matières et/ou avec des fils de l'autre matière.

Selon un mode de réalisation particulièrement avantageux de l'invention, la structure composite comprend au moins un assemblage ou une nappe de fils formée d'au moins 50 % (de préférence d'au moins 80 % et de façon particulièrement préférée de 100 %) en poids de fils mixtes. De préférence, ces fils mixtes sont des fils dits « co-mélés » (ou « fils composites »), c'est-à-dire des fils composés de filaments de l'une des matières et de filaments de l'autre matière, les filaments étant mélangés au sein des fils ce mode étant d'autant plus avantageux que le mélange est homogène), ces fils étant généralement obtenus par assemblage des filaments directement lors de leur fabrication (selon les procédés décrits par exemple dans les demandes de brevets EP-A-0 590 695 et EP-A-0 616 055). De préférence, les fils co-mêlés sont constitués de filaments de verre et de filaments de matière organique thermoplastique intimement mélangés.

Les avantages dus à l'utilisation dans le procédé selon l'invention de structures composites présentant une matière organique sous la forme de fils ou de filaments, à plus forte raison de structures comprenant des fils mixtes, et à encore plus forte raison de structures comprenant des fils co-mêlés (en particulier une majorité de fils co-mêlés), sont notamment que la fusion de la matière organique se fait plus rapidement, ce qui permet un gain de productivité, et que les produits obtenus sont plus homogènes. L'utilisation de fils composites permet également, du fait de la rapidité et facilité de mise en oeuvre, de réaliser de façon rentable des produits composites présentant des taux de renforts plus élevés.

Comme indiqué précédemment, la structure composite présente avantageusement une tenue suffisante pour pouvoir être manipulée et mise en oeuvre dans le procédé selon l'invention. De préférence également, elle doit être facilement déformable pour bien épouser la forme du moule. en particulier la ou les couches ou parties de la structure incluant les fibres longues de renfort doivent être facilement déformables.

Ainsi, par exemple, la ou les couches ou parties de la structure incluant les fibres longues de renfort peuvent être sous forme de mats (de fils continus ou coupés) ou de tissus peu serrés (c'est-à-dire des tissus à armure déformable, par exemple des tricots ou tissus de type « jersey » ou des tissus à armure sergé). De façon avantageuse selon l'invention, la structure composite comprend au moins un réseau de fils entrecroisés, plus particulièrement comprend un assemblage ou une nappe de fils ou filaments de renfort sous forme d'un tissu (ou tricot), l'utilisation de tissu(s) permettant notamment d'obtenir des produits composites présentant de bonnes propriétés mécaniques. Les mêmes fils ou ensembles de fils peuvent être utilisés pour former la chaîne et la trame du tissu ou réseau, ou la trame et la chaîne peuvent être constituées de fils différents ou d'associations différentes de fils. Ainsi, le réseau de fils peut se présenter, par exemple, sous forme d'un tissu dont la chaîne est constituée de fils co-mêlés matière organique/matière de renforcement et dont la trame est constituée de 80 à 100 % de fils de matière organique de même nature que celle des fils co-mêlés. Ce réseau présente alors une direction préférentielle d'orientation des fils de renforcement (structure unidirectionnelle). Dans un cas avantageux de la présente invention, la structure comprend au moins un tissu (avantageusement déformable, par exemple un tricot jersey) comprenant des fils co-mêlés en chaîne et en trame.

La structure composite peut comprendre ou être constituée d'une ou plusieurs couches de matière organique et/ou de renfort. Par exemple, elle peut comprendre un ou plusieurs tissus, éventuellement différents, cette structure composite complexe permettant de combiner différentes propriétés de différents tissus, et/ou peut comprendre une ou plusieurs couches de fils coupés et/ou peut comprendre un ou plusieurs films organiques, etc. Comme indiqué dans la définition de l'invention, l'ensemble comprenant la poche gonflable et la structure composite (et dans la plupart des cas et de préférence, au moins la structure composite) comprend avantageusement au moins un matériau apte à fluer sous l'action de la pression et de la chaleur, en complément de la matière de renfort sous forme de fibres longues. L'adjonction d'un matériau fluable permet le cas échéant de former les détails de la pièce en se logeant dans les espaces où ne peut se mettre la fibre longue de renfort, en particulier quand elle est sous forme de tissu ou réseau. Il est ainsi possible d'intégrer dans la pièce moulée des fonctions que les structures uniquement sous forme de fibres longues de renfort ne peuvent pas faire (telles que des fixations, des nervures) et qui sont requises dans certaines applications des pièces moulées, et/ou d'obtenir des produits plus homogènes et présentant le cas échéant de meilleures propriétés mécaniques.

Le matériau fluable peut se présenter sous forme d'une ou plusieurs couches adjointes à la ou aux couches renfermant les fibres de renfort et/ou peut être intégré dans la ou les couches renfermant les fibres de renfort.

Par exemple, dans le cas notamment où la structure composite comprend une couche de fils de renfort dans laquelle le taux de renforts est supérieur à 40 ou 50 % en poids de la couche (ce taux pouvant aller jusqu'à 100 % lorsque la couche est uniquement constituée de fils de renfort), la structure composite comprend également de préférence, à titre de matériau fluable permettant également à la couche de renfort de mieux glisser pendant le moulage, au moins une feuille de matière organique et/ou au moins une feuille de fils coupés imprégnés de matière organique adjointe à la couche de renforts, et de façon particulièrement préférée au moins deux feuilles de matière organique et/ou de fils coupés imprégnés de matière organique, ces deux feuilles étant placées de part et d'autre de la couche de renforts, la matière organique étant le cas échéant de même nature que celle présente dans la couche de renforts.

Dans le cas notamment où la structure composite comprend une couche de fils de renfort dans laquelle le taux de renforts est inférieur à 40 ou 50 % en poids de la couche, le matériau fluable peut être intégré à la couche ; il peut alors s'agir par exemple d'une matière organique imprégnant les fils de renforts et/ou, plus avantageusement, il peut s'agir d'une matière organique sous forme de fils ou filaments mélangés aux fibres de renfort, dans le cas de l'utilisation de fils co-mêlés par exemple. Le matériau fluable (qui peut regrouper une ou éventuellement plusieurs matières différentes sous une ou plusieurs formes) peut également se présenter en partie sous forme de couche(s) jointe(s) et en partie sous forme intégrée à la ou aux couches de renfort.

Selon un mode de réalisation avantageux, la structure composite utilisée dans l'invention est constituée d'une ou plusieurs couches de tissus de fils composites et d'une ou plusieurs couches de matière organique de même nature que celle contenue dans les fils composites. Selon un autre mode de réalisation également avantageux, la structure comprend au moins un tissu de fils composites ou mixtes et au moins une nappe de fils coupés (ces fils coupés comprenant ou étant constitués de fils composites ou mixtes ou de renforts, éventuellement imprégnés d'une matière organique de même nature que celle des fils composites, et présentant une longueur comprise par exemple entre 10 et 60 mm environ). Dans ce cas où la structure comprend au moins un tissu de fils mixtes et à titre de matériau complémentaire apte à fluer au moins une nappe de fils coupés de renfort, la couche de renforts aptes à fluer permet d'améliorer le moulage et d'obtenir une répartition plus homogène des renforts dans toutes les parties de la pièce alors que la première couche de fils solidaires de type tissu épouse simplement la forme du moule en permettant d'obtenir de bonnes propriétés mécaniques. L'utilisation d'une structure associant au moins une couche de renforts tissés (tissus ou tricots par exemple de type jersey) et au moins une couche de renforts non tissés permet ainsi d'obtenir des produits faciles à mouler et homogènes et présentant un bon niveau de propriétés mécaniques, et ceci d'autant plus si le renfort et la matière organique au sein de la structure utilisée sont déjà fortement associés sous forme de fils composites. La pièce finale peut ainsi être de forme très complexe et le taux de renfort simultanément homogène et élevé.

La poche gonflable utilisée dans le procédé selon l'invention doit présenter une bonne étanchéité et est de préférence étirable et/ou déformable. Elle peut être de même nature (ou de la même famille) que la matière organique présente dans la structure ou de nature différente et peut être intégrée ou non dans la pièce finale.

Selon un mode de réalisation de l'invention, on utilise une poche gonflable, se présentant par exemple sous forme d'un tube, appelée « liner », cette poche gonflable étant préférentiellement en une matière de même nature que la matière plastique organique contenue dans la structure composite (par exemple si la matière contenue dans la structure est un polypropylène, le liner est préférentiellement également en polypropylène). Le cas échéant, le liner est préchauffé à une température généralement égale ou légèrement supérieure à son point de ramollissement (par exemple à une température de l'ordre de 150-200°C pour un liner en polypropyléne), la structure composite étant préchauffée simultanément et séparément à une température généralement supérieure au point de ramollissement de la matière organique présente dans la structure (par exemple de l'ordre de 180-250°C pour du polypropylène), puis la structure est enroulée (en faisant de préférence plusieurs tours, par exemple trois tours, pour minimiser la ligne de soudure) autour du liner et l'ensemble préchauffé liner/structure est posé dans un moule de compression porté à une température inférieure aux températures de ramollissement précitées (par exemple de l'ordre de 40 à 100°C dans le cas de l'utilisation d'un liner et d'une structure comprenant du polypropylène), la température du moule étant généralement choisie suffisamment faible de façon à éviter les risques de collage de l'ensemble préchauffé au moule. Une aiguille ou plusieurs aiguilles (dans le cas notamment où la pièce est constituée de plusieurs parties creuses distinctes) sont alors introduites dans le liner et après fermeture du moule, le fluide permettant de gonfler le liner est injecté à une pression supérieure à 40 bars.

Le liner est de préférence porté par un support rigide (de forme généralement adaptée à la pièce à réaliser) pendant son préchauffage pour éviter le cas échéant qu'il ne s'effondre sous l'action de la chaleur et pour permettre un chauffage plus homogène du liner, le support étant retiré avant introduction de l'ensemble préchauffé liner/structure dans le moule. Le liner est préchauffé à la fois pour pouvoir s'étirer et permettre le placage du composite aux parois du moule, et pour permettre le cas échéant son intégration par thermosoudage au produit moulé (dans le cas d'un liner compatible avec la structure).

Eventuellement, le liner peut être de nature différente de celle de la matière organique de la structure composite utilisée et/ou peut ne pas nécessiter de chauffage pour s'étirer. Il s'agit alors par exemple d'un liner en un polymère différent de celui présent dans la structure ou d'un élastomère. De préférence cependant, le liner est de même nature que la matière organique de la structure utilisée pour une compatibilité de collage et de recyclage notamment, et il s'intègre au produit fini.

Selon un autre mode de réalisation de l'invention, la poche gonflable se présente sous forme d'un film étirable revêtant au moins l'une des faces de la structure composite, l'ensemble préchauffé étant alors obtenu en chauffant la structure composite ainsi revêtue puis en enroulant ladite structure de façon à ce que le film se trouve à l'intérieur de la structure enroulée.

Selon un troisième mode de réalisation de l'invention, l'ensemble préchauffé est obtenu en chauffant au moins deux structures composites distinctes revêtues chacune d'au moins un film étirable sur au moins une de leurs faces puis en disposant les structures revêtues des films de façon à ce que les films soient en regard l'un de l'autre et forment ainsi la poche gonflable étanche (les bords des structures étant maintenus joints pendant le moulage de façon à assurer l'étanchéité) en empêchant également le collage des structures.

L'avantage d'utiliser une poche gonflable se présentant sous la forme du ou des films précédemment décrits plutôt que sous la forme de liner, est que ce ou ces films peuvent être déposés directement à la fabrication des structures. Cependant, dans le cas d'une poche gonflable sous forme de film(s), cette poche est préférentiellement de nature différente de celle de la matière organique de la ou des structures afin de pouvoir se ramollir lors du chauffage des structures pour s'étirer sans pour autant fondre et perdre sa fonction d'étanchéité. Par exemple pour une structure comprenant du polypropylène comme matière organique. le film peut être en polyamide ou en polybutylène téréphtalate.

Comme dispositif de soufflage, on utilise généralement au moins une machine à souffler ou machine à injecter à aiguille(s). L'injection du fluide permettant le gonflage de la poche se fait généralement à l'aide d'une aiguille mais peut également se faire, selon les dimensions de la pièce et le nombre de parties creuses, à l'aide de plusieurs aiguilles. Eventuellement également, on peut utiliser plusieurs poches gonflables, une seule poche gonflable étant cependant utilisée dans le cas général et de préférence. L'aiguille ou les aiguilles de soufflage sont positionnées correctement à l'intérieur de la poche gonflable (ou éventuellement des poches gonflables) après insertion de l'ensemble préchauffé dans le moule. Conformément à l'invention, le soufflage se fait à pression supérieure à 40 bars, la pression restant inférieure à 420 bars et dans la plupart des cas, inférieure à 80 bars et étant avantageusement plus faible que la pression nécessaire pour faire la même pièce pleine en compression.

Généralement, le fluide injecté est un gaz, par exemple de l'air ou de l'azote pour limiter l'oxydation. Le gaz est évacué dès que la pièce est suffisamment froide pour ne plus se déformer, l'évacuation de l'air ou de l'azote suivant le même chemin que le soufflage et/ou se faisant à l'aide d'une purge.

Lors du soufflage, il est impératif de pincer les bords de l'ensemble préchauffé, soit aux deux extrémités s'il s'agit d'une structure enroulée sur un liner ou d'une structure enroulée revêtue d'un film, soit sur la périphérie, s'il s'agit d'au moins deux structures distinctes avec films en vis à vis.

Eventuellement, si l'on souhaite munir la pièce composite creuse d'un remplissage, par exemple d'une mousse, l'injection de l'air ou de l'azote peut être remplacée par l'injection de polymère sous forme de mousse à faible densité.

Le moulage se fait de préférence dans un moule en acier reproduisant parfaitement la forme recherchée. La température du moule est choisie de façon à faciliter le fluage de la matière fluable et le remplissage des formes complexes de l'empreinte du moule par le composite. La durée de moulage est généralement fonction de l'épaisseur de la pièce (de l'ordre de 8 à 10 secondes par millimètre d'épaisseur). Pendant cette durée, la pression de soufflage est maintenue constante et la pièce se refroidit du fait de la température plus basse du moule. La pression est ensuite supprimée (lorsque la pièce est suffisamment rigide pour pouvoir être manipulée) puis l'aiguille ou les aiguilles sont retirées de l'intérieur de la pièce avant ouverture du moule. Après ouverture du moule, la pièce creuse est démoulée et éventuellement ébavurée ou découpée à ses dimensions finales.

D'autres avantages et caractéristiques de l'invention seront mis en évidence dans la description suivante en référence aux dessins illustrant trois modes de réalisation avantageux de la présente invention, ces modes de réalisation étant illustratifs mais non limitatifs.

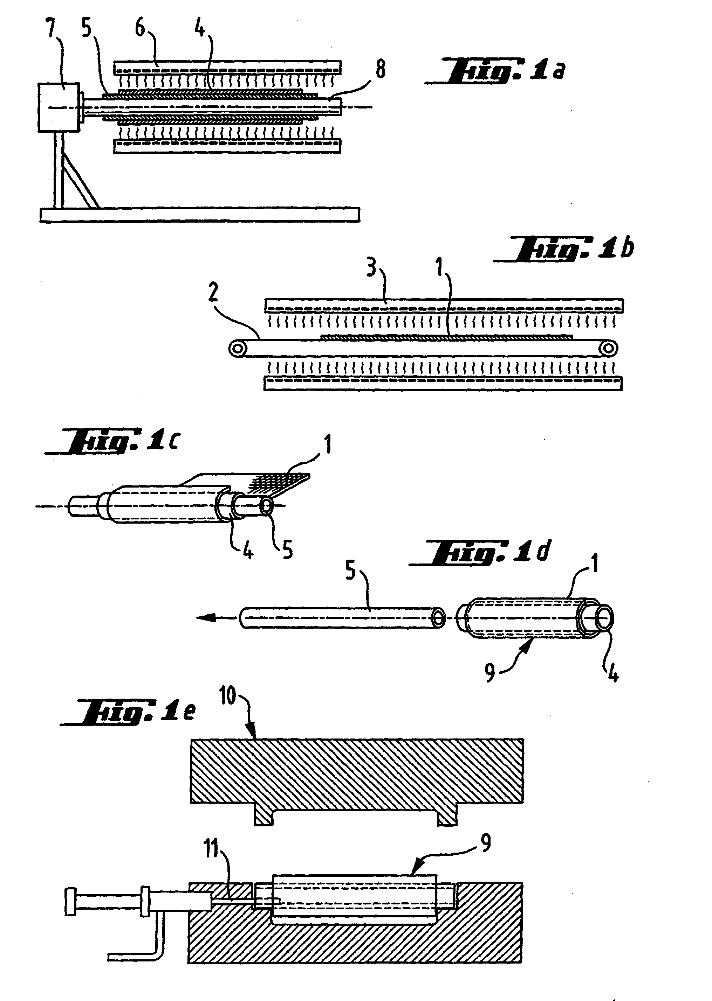

Les parties (a), (b), (c), (d), (e), (f) et (g) de la figure 1 représentent très schématiquement différentes étapes d'un procédé selon la présente invention. Dans ce procédé, un tissu 1 constitué de filaments de verre et de filaments de matière organique thermoplastique (par exemple du polypropylène) intimement mélangés est déposé sur un support 2 et préchauffé dans un four ou un tunnel à air chaud ou rayonnement infrarouge 3 (partie b). Simultanément (partie a), un liner 4 sous forme d'un tube (par exemple en polypropylène) porté par un support rigide 5 est préchauffé dans un four 6, le support rigide étant entraîné en rotation à l'aide d'un moteur 7 et d'un axe 8 afin d'avoir un préchauffage homogène. Le tissu 1 est ensuite enroulé autour du liner 4 (partie c), le support rigide 5 retiré (partie d) et l'ensemble préchauffé liner/structure 9 est posé dans un moule de compression 10 chauffé. Une aiguille 11 est alors introduite dans le liner (partie e) et après fermeture du moule, de l'air est injecté dans le liner à une pression supérieure à 40 bars (partie f). Après consolidation de la pièce moulée, l'air est évacué, le moule ouvert, et la pièce composite retirée du moule (partie g). On obtient par exemple la pièce telle que représentée en partie h, cette pièce présentant une section centrale creuse, comme représenté en partie i et des bords joints 12 pouvant servir de fixations de la pièce ou pouvant éventuellement être découpés pour ne garder que la partie de section creuse.

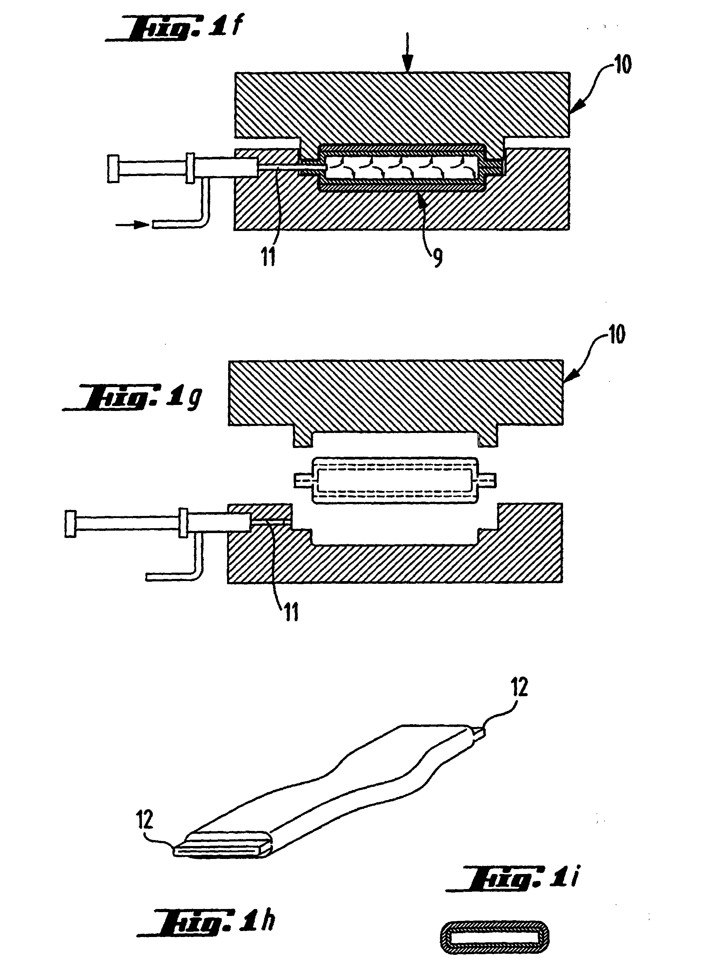

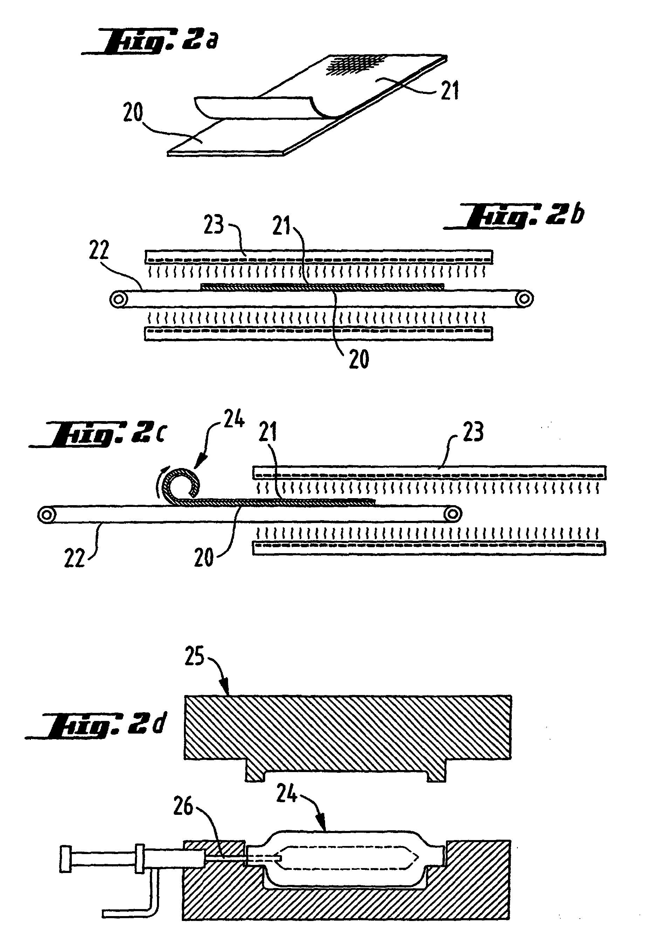

Les parties (a), (b), (c), (d), (e), (f) et (g) de la figure 2 représentent très schématiquement différentes étapes d'un second mode de réalisation du procédé selon la présente invention. Dans ce procédé, un tissu 20 constitué de fils composites verre/matière organique thermoplastique et revêtu sur une de ses faces d'un film étanche 21 (partie a de la figure 2) est posé sur un support 22 puis est préchauffé dans un four 23 (partie b) avant d'être enroulé sur lui-même de façon à ce que le film se trouve à l'intérieur (partie c). L'ensemble préchauffé tissu/film 24 est posé dans un moule de compression 25 chauffé. Une aiguille 26 est alors introduite dans l'ensemble (partie d) et après fermeture du moule, de l'air est injecté à une pression supérieure à 40 bars (partie e). Après consolidation de la pièce moulée, l'air est évacué, le moule ouvert, et la pièce composite retirée du moule (partie f). On obtient par exemple la pièce dont la section est représentée en partie g.

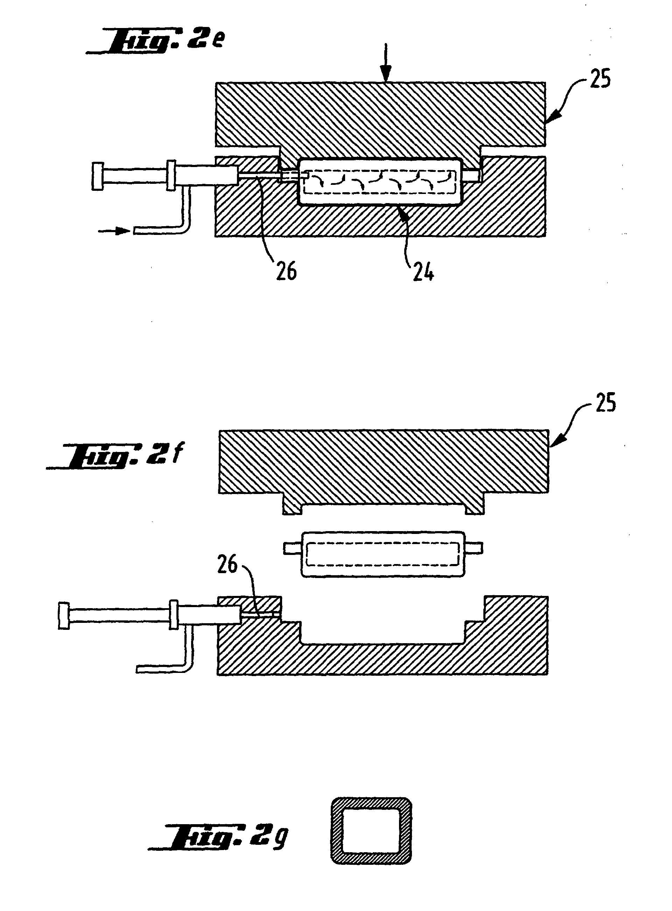

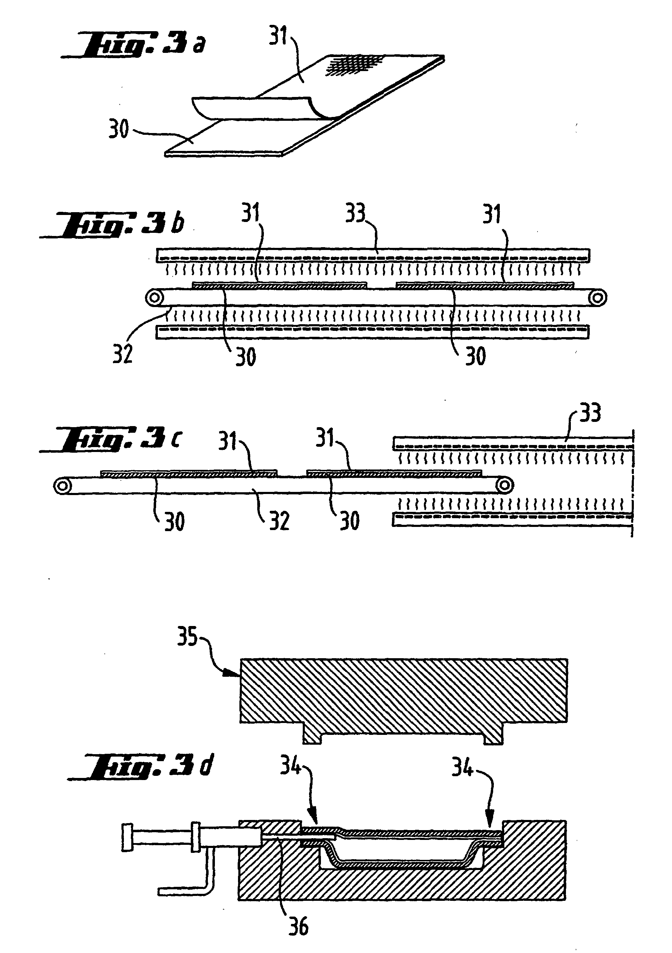

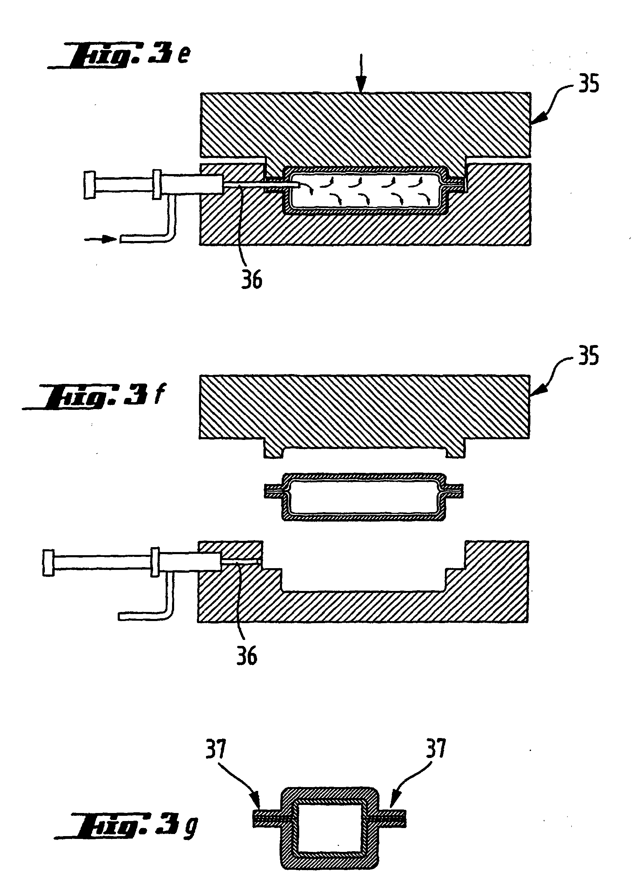

Les parties (a), (b), (c), (d), (e), (f) et (g) de la figure 3 représentent très schématiquement différentes étapes d'un troisième mode de réalisation du procédé selon la présente invention. Dans ce procédé, deux tissus 30, de type tel que représenté en figure a, ces tissus étant constitués chacun de fils composites verre/matière organique thermoplastique et revêtus chacun sur une de leurs faces d'un film étanche 31 sont posés sur un support 32 puis préchauffés dans un four 33 (partie b). A la sortie du four (partie c), les tissus sont joints de façon à ce que les films soient en regard l'un de l'autre et forment ainsi la poche gonflable étanche (les bords 34 des tissus étant maintenus joints pendant le moulage de façon à assurer l'étanchéité) et l'ensemble préchauffé tissus munis de films est posé dans un moule de compression 35 chauffé. Une aiguille 36 est alors introduite dans l'ensemble (partie d) et après fermeture du moule, de l'air est injecté à une pression supérieure à 40 bars (partie e). Après consolidation de la pièce moulée, l'air est évacué, le moule ouvert, et la pièce composite retirée du moule (partie f). On obtient par exemple la pièce dont la section est représentée en partie g, cette pièce présentant une section creuse et des bords proéminents 37, ces bords pouvant remplir certaines fonctions (par exemple pouvant servir de fixations ou de rigidificateurs de la pièce) ou éventuellement pouvant être ébavurés.

Les articles moulés pouvant être réalisés par le procédé selon l'invention sont par exemple des poutres de pare-chocs, des longerons de protection, des absorbeurs d'énergie pour les véhicules automobiles, des pièces de structure pour bateaux, des traverses supports, des caissons de portières de voiture, des planchers ou des tablettes arrières de voiture, etc.

## Revendications

1. Procédé de fabrication de produits composites creux, dans lequel on introduit dans un moule (10, 25, 35) un ensemble préchauffé (9, 24) comprenant à coeur au moins une poche gonflable (4) revêtue d'au moins une structure composite (1, 20, 30), la structure composite (1, 20, 30) comprenant au moins une matière de renfort sous forme de fibres longues et l'ensemble préchauffé comprenant au moins un matériau apte à fluer, et dans lequel on gonfle la poche gonflable (4) sous une pression supérieure à 40 bars afin que l'ensemble préchauffé prenne la forme du moule (10, 25, 35).

2. Procédé selon la revendication 1, **caractérisé en ce que** la poche gonflable (4) est gonflée à l'aide d'un gaz, ce gaz étant évacué après consolidation du produit moulé et avant ouverture du moule (10, 25, 35).

3. Procédé selon l'une des revendications 1 ou 2, **caractérisé en ce que** l'on démoule le produit composite creux obtenu après consolidation, la poche gonflable (4) restant intégrée audit produit.

4. Procédé selon l'une des revendications 1 à 3, **caractérisé en ce que** la structure composite (1, 20, 30) comprend au moins un matériau apte à fluer et **en ce que** la poche gonflable (4) est en un matériau de même nature que le matériau apte à fluer de la structure composite.

5. Procédé selon l'une des revendications 1 à 4, **caractérisé en ce que** la structure composite (1, 20, 30) est formée d'au moins un réseau de fils entrecroisés.

6. Procédé selon l'une des revendications 1 à 5, **caractérisé en ce que** la structure composite (1, 20, 30) comprend des filaments ou fils de renfort entremêlés et/ou intercalés avec des filaments ou fils de matière organique.

7. Procédé selon l'une des revendications 1 à 6, **caractérisé en ce que** la structure composite (1, 20, 30) comprend au moins une matière organique thermoplastique ou thermodurcissable.

8. Procédé selon l'une des revendications 1 à 7, **caractérisé en ce que** la poche gonflable (4) se présente sous forme d'un tube autour duquel on entoure la structure composite (1, 20, 30), après avoir chauffé ledit tube et ladite structure, de façon à obtenir l'ensemble préchauffé (9, 24).

9. Procédé selon l'une des revendications 1 à 7, **caractérisé en ce que** la poche gonflable (4) se présente sous forme d'un film revêtant au moins l'une des faces de la structure composite (1, 20, 30) et **en ce que** l'ensemble préchauffé (9, 24) est obtenu en chauffant la structure composite (1, 20, 30) ainsi revêtue puis en enroulant ladite structure de façon à ce que le film se trouve à l'intérieur de la structure enroulée.

10. Procédé selon l'une des revendications 1 à 7, **caractérisé en ce que** l'ensemble préchauffé (9, 24) est obtenu en chauffant deux structures (30) revêtues chacune d'au moins un film (31) sur au moins l'une de leurs faces puis en disposant les structures revêtues des films de façon à ce que les films soient en regard l'un de l'autre et forment ainsi la poche gonflable.

11. Produit composite creux obtenu par le procédé selon l'une des revendications 1 à 10, ledit produit comprenant plus de 20% de verre sous forme de fibres longues et présentant une épaisseur de paroi comprise entre 1 et 10 mm environ.

12. Produit composite selon la revendication 11, **caractérisé en ce qu'**il est muni d'un matériau de remplissage.

## Claims

1. Process for the manufacture of hollow composite products, in which process there is introduced into a mould (10, 25, 35) a preheated assembly (9, 24) comprising at its core at least one inflatable pocket (4) covered with at least one composite structure (1, 20, 30), the composite structure (1, 20, 30) comprising at least one reinforcing material in the form of long fibres and the preheated assembly comprising at least one material capable of flowing, and in which process the inflatable pocket (4) is inflated at a pressure higher than 40 bar so that the preheated assembly takes on the shape of the mould (10, 25, 35).

2. Process according to claim 1, **characterised in that** the inflatable pocket (4) is inflated by means of a gas, this gas being evacuated after the solidification of the moulded product and before the mould (10, 25, 35) is opened.

3. Process according to either claim 1 or claim 2, **characterised in that** the hollow composite product obtained after solidification is removed from the mould, the inflatable pocket (4) remaining integrated in the product.

4. Process according to any one of claims 1 to 3, **characterised in that** the composite structure (1, 20, 30) comprises at least one material capable of flowing and **in that** the inflatable pocket (4) is made of a material of the same nature as the material capable of flowing of the composite structure.

5. Process according to any one of claims 1 to 4, **characterised in that** the composite structure (1, 20, 30) is formed from at least one network of intersecting threads.

6. Process according to any one of claims 1 to 5, **characterised in that** the composite structure (1, 20, 30) comprises reinforcing filaments or threads intermingled and/or intercalated with filaments or threads of organic material.

7. Process according to any one of claims 1 to 6, **characterised in that** the composite structure (1, 20, 30) comprises at least one thermoplastic or thermosetting organic material.

8. Process according to any one of claims 1 to 7, **characterised in that** the inflatable pocket (4) is in the form of a tube around which the composite structure (1, 20, 30) is wrapped, after the tube and the structure have been heated, in order to obtain the preheated assembly (9, 24).

9. Process according to any one of claims 1 to 7, **characterised in that** the inflatable pocket (4) is in the form of a film covering at least one of the faces of the composite structure (1, 20, 30) and **in that** the preheated assembly (9, 24) is obtained by heating the composite structure (1, 20, 30) so covered and then by rolling up said structure in such a manner that the film is on the inside of the rolled-up structure.

10. Process according to any one of claims 1 to 7, **characterised in that** the preheated assembly (9, 24) is obtained by heating two structures (30) which are each covered with at least one film (31) on at least one of their faces and then by arranging the film-covered structures in such a manner that the films face one another and thus form the inflatable pocket.

11. Hollow composite product obtained by the process according to any one of claims 1 to 10, the product comprising more than 20% of glass in the form of long fibres and having a wall thickness of approximately from 1 to 10 mm.

12. Composite product according to claim 11, **characterised in that** it is provided with a filling material.

## Patentansprüche

1. Verfahren zur Herstellung hohler Verbunderzeugnisse, in welchem ein vorgewärmtes Gebilde (9, 24), das im Kern wenigstens einen aufblasbaren Sack (4) umfasst, der mit mindestens einem Verbundaufbau (1, 20, 30) beschichtet ist, der mindestens ein Verstärkungsmaterial in Form von langen Fasern enthält, wobei das vorgewärmte Gebilde wenigstens ein fließfähiges Material umfasst, in eine Form (10, 25, 35) gebracht und der aufblasbare Sack (4) mit einem Druck von über 40 bar aufgeblasen wird, damit die vorgewärmte Einheit die Gestalt der Form (10, 25, 35) annimmt.

2. Verfahren nach Anspruch 1, **dadurch gekennzeichnet, dass** der aufblasbare Sack (4) mittels eines Gases aufgeblasen wird, das nach Verfestigung des Formerzeugnisses und vor Öffnung der Form (10, 25, 35) abgesaugt wird.

3. Verfahren nach Anspruch 1 oder 2, **dadurch gekennzeichnet, dass** das erhaltene hohle Verbunderzeugnis nach der Verfestigung entnommen wird, wobei der aufblasbare Sack (4) im Erzeugnis integriert bleibt.

4. Verfahren nach einem der Ansprüche 1 bis 3, **dadurch gekennzeichnet, dass** der Verbundaufbau (1, 20, 30) mindestens ein fließfähiges Material enthält, **und dass** der aufblasbare Sack (4) aus einem Material mit demselben Charakter wie dem des fließfähigen Materials des Verbundaufbaus besteht.

5. Verfahren nach einem der Ansprüche 1 bis 4, **dadurch gekennzeichnet, dass** der Verbundaufbau (1, 20, 30) aus mindestens einem Netz aus miteinander verschlungenen Fäden gebildet ist.

6. Verfahren nach einem der Ansprüche 1 bis 5, **dadurch gekennzeichnet, dass** der Verbundaufbau (1, 20, 30) Verstärkungsfilamente bzw. -fäden enthält, die mit Filamenten bzw. Fäden aus organischem Material vermengt und/oder zwischen diese eingelagert sind.

7. Verfahren nach einem der Ansprüche 1 bis 6, **dadurch gekennzeichnet, dass** der Verbundaufbau (1, 20, 30) mindestens ein thermoplastisches oder wärmeaushärtbares organisches Material enthält.

8. Verfahren nach einem der Ansprüche 1 bis 7, **dadurch gekennzeichnet, dass** der aufblasbare Sack (4) in Form eines Schlauchs vorliegt, um welchen der Verbundaufbau (1, 20, 30), nachdem dieser Schlauch und dieser Aufbau erwärmt worden sind, derart gelegt wird, dass die vorgewärmte Einheit (9, 24) erhalten wird.

9. Verfahren nach einem der Ansprüche 1 bis 7, **dadurch gekennzeichnet, dass** der aufblasbare Sack (4) in Form einer Folie vorliegt, mit welcher mindestens eine Seite des Verbundaufbaus (1, 20, 30) beschichtet ist, **und dass** die vorgewärmte Einheit (9, 24) erhalten wird, indem der so beschichtete Verbundaufbau (1, 20, 30) erwärmt und anschließend dieser Aufbau derart aufgewickelt wird, dass sich die Folie im Inneren des aufgewickelten Aufbaus befindet.

10. Verfahren nach einem der Ansprüche 1 bis 7, **dadurch gekennzeichnet, dass** das vorgewärmte Gebilde (9, 24) erhalten wird, indem zwei Strukturen (30) erwärmt werden, die jeweils mit mindestens einer Folie (31) auf wenigstens einer Seite beschichtet sind, und anschließend die mit der/den Folie/n beschichteten Strukturen derart angeordnet werden, dass sich die Folien einander gegenüber befinden und so den aufblasbaren Sack bilden.

11. Verbunderzeugnis, das hohl und durch das Verfahren nach einem der Ansprüche 1 bis 10 hergestellt ist und mehr als 20 % Glas in Form von langen Fasern enthält und eine Wanddicke von etwa 1 bis 10 mm aufweist.

12. Verbunderzeugnis nach Anspruch 11, **dadurch gekennzeichnet, dass** es mit einem Füllmaterial versehen ist.
